Europäisches Patentamt

European Patent Office

Office européen des brevets

(19)

(11) Veröffentlichungsnummer: **0 325 749**
**B1**

(12) **EUROPÄISCHE PATENTSCHRIFT**

(45) Veröffentlichungstag der Patentschrift:
**07.11.90**

(51) Int. Cl.⁵: **F16C 9/04**

(21) Anmeldenummer: **88120611.4**

(22) Anmeldetag: **09.12.88**

(54) **Geteiltes Gleitlager.**

(30) Priorität: **27.01.88 DE 3802275**

(43) Veröffentlichungstag der Anmeldung:
**02.08.89 Patentblatt 89/31**

(45) Bekanntmachung des Hinweises auf die Patenterteilung:
**07.11.90 Patentblatt 90/45**

(84) Benannte Vertragsstaaten:
**AT DE FR GB IT**

(56) Entgegenhaltungen:
**DE-A- 2 145 371**
**DE-A- 2 711 938**

(73) Patentinhaber: **MTU MOTOREN- UND TURBINEN-UNION FRIEDRICHSHAFEN GMBH,**
**Olgastrasse 75 Postfach 20 40,**
**D-7990 Friedrichshafen 1(DE)**

(72) Erfinder: **Just, Karl, Stockerholzstrasse 26,**
**D-7990 Friedrichshafen(DE)**

## Beschreibung

Die Erfindung betrifft ein geteiltes Gleitlager nach dem Oberbegriff des Anspruchs 1, wie es beispielsweise aus der DE-C 2 711 938 als bekannt hervorgeht.

In der eingangs genannten Schrift ist ein Gleitlager dargestellt, dessen zwei Lagerschalenhälften während der Montage durch Klammern zusammengehalten werden. Die aus einem federnden Rund- oder Bandmaterial hergestellten Klammern greifen in von den Trennflächen der Lagerschalenhälften ausgehende Bohrungen mit kreisrundem Querschnitt ein. In einer Ausbildung ist die Klammer mit offenbar in zwei Richtungen überdrückbaren Kröpfungen ausgebildet, die in durch Querbohrungen gebildete Vertiefungen der Aufnahmebohrungen eingerastet dargestellt sind. Um den Zusammenhalt der Lagerschalenhälften zu erreichen, ist es jedoch zunächst einmal notwendig, die Klammer in einer Aufnahmebohrung in einer Lage zu fixieren, damit sich ihr anderes Ende in der Aufnahmebohrung der gegenüberliegenden Lagerschalenhälfte einfinden kann. Eine mit einem Ende eingesetzte Klammer hat aufgrund ihrer Form mit zwei schräg abstehenden Schenkeln jedoch keinen Halt in der Aufnahmebohrung und fällt im ungünstigen Fall wieder heraus oder nimmt eine undefinierte Lage ein, in der das selbsttätige Einfinden des hervorstehenden Endes in die andere Aufnahmebohrung ohne besondere Haltemittel nicht möglich ist. Ein Montageverfahren, bei dem spezielle Vorrichtungen zum Halten der Klammer benötigt werden, die auch noch zwischen den zusammenfahrenden Trennflächen angeordnet sein müssen, ist in der Praxis jedoch unbrauchbar. Zum Lösen der Verbindung sind die Kröpfungen aus den Querbohrungen herauszudrücken. Wie schon beschrieben, würde die Klammer nach dem Auseinanderziehen der Lagerschalenhälften wegen fehlendem Halt aus der Aufnahmebohrung herausfallen. Sofern es sich bei dem Gleitlager beispielsweise um ein Pleuellager einer Brennkraftmaschine handelt, würde die Klammer in den Kurbelraum hineingeraten, von wo sie nur mit großem Aufwand wieder entfernt werden kann.

In einer weiteren Ausbildung besitzt eine Klammer zwei auf eine Seite hin umgebogene Schenkel, von denen der eine widerhakenartig abgespreizt ist, und der andere ösenförmig gebogen ist. Da der Halt der mit dem ösenförmigen Ende der Klammer verbundenen Lagerschalenhälfte allein durch Kraftschluß bewirkt wird, und die Haltekräfte deshalb begrenzt sind, kann es leicht zu unerwünschten Verlagerungen oder Verschiebungen der Lagerschalenhälften kommen. Zumindest bei schweren Lagerschalen ist die Anwendung dieser Klammer nicht geboten.

In einer weiteren, ebenfalls in der DE-C 2 711 938 dargestellten Ausbildung besitzt die Klammer an beiden Enden widerhakenartig abgespreizte Schenkel, die in Vertiefungen oder Querbohrungen der Aufnahmebohrungen eingreifen. Nachteilig an dieser Ausführung der Klammer ist, daß wegen der notwendigen Fertigungstoleranzen ein spielfreier Zusammenhalt der Lagerschalenhälften nicht gewährleistet ist. Ein Auseinanderklaffen der Lagerschalenhälften erschwert jedoch die Montage. Nachteilig ist ferner, daß die nach Abschluß der Lagermontage an der Lagerschalen verbleibenden Klammern aufgrund der Fertigungstoleranzen Eigenbewegungen ausführen können. Nachteilig ist auch, daß die Verbindung nur zu lösen ist, indem in eine Querbohrung ein Werkzeug eingreift, mit dem ein Widerhaken zurückgebogen wird, während gleichzeitig die Lagerhälften auseinandergezogen werden müssen.

Nach einem internen Stand der Technik sind die Hohlräume, in die die Klammern, die aus einem Bandmaterial hergestellt sind und widerhakenartig ausgebildete Schenkel aufweisen, eingebracht werden, als nutenförmige Ausfräsungen ausgebildet. Dadurch wird der Vorteil erzielt, daß sich die Klammern weitgehend lagerichtig in ihren Aufnahmen einfinden und die widerhakenartig geformten Schenkel deshalb sicher in die vorgesehen Quernuten eingreifen. Da die Schenkel nach dem Einrasten in die Querbohrungen jedoch entspannt sind, wird kein fester Sitz der Klammern erzielt. Da die Klammern deshalb kippen können, wird das Zusammenführen der Lagerschalenhälften eventuell durch Verkanten erschwert. Nach dem Aneinandersetzen klaffen die Lagerschalenhälften auseinander, was für die weitere Montage des Lagers ungünstig ist. Nach beendeter Montage kann ein wackelfreier Sitz der in ihren Aufnahmen verbleibenden Klammern nur erreicht werden, indem Schultern an der Klammer aufgeweitet werden, so daß die Klammern in einer Lagerhälfte spielfrei eingepaßt sind. Dadurch wird jedoch eine eventuelle spätere Demontage wieder erschwert.

Derß Erfindung liegt die Aufgabe zugrunde, eine Klammer aufzuzeigen, die selbsttätig einen festen Sitz in ihrer Aufnahme einnimmt, und zwar sowohl dann wenn sie nur einseitig in einer Aufnahme steckt, als auch dann, wenn die Lagerschalenhälften aneinander angesetzt sind, so daß einerseits ein sicheres, selbsttätiges Einfinden der Klammer in der offenen Aufnahme an der anderen Lagerschalenhälfte und damit eine einfache, problemlose Montage und auch eine einfache spätere Demontage gewährleistet ist, und andererseits die Lagerschalenhälften spielfrei aneinander angedrückt gehalten werden.

Diese Aufgabe wird bei einer gattungsgemäßen Einrichtung durch die kennzeichnenden Merkmale des Anspruches 1 gelöst. Der feste Sitz der Klammern in ihrer Aufnahme, bevor noch die Lagerschalenhälften aneinander gesetzt sind, wird dadurch erreicht, daß die Hohlräume zur Aufnahme der Klammer als nutenförmige Ausfräsungen mit im wesentlichen rechteckigem Querschnitt ausgeführt sind, und die aus einem Bandmaterial hergestellten Klammern jeweils an ihrem zunächst einseitig in der Aufnahme steckenden Ende an drei Stellen entweder linienförmig oder flächenförmig abgestützt sind. Denn infolge der federnden Anlage eines Schenkels in seinem einwärts gebogenen Endbereich entsteht eine Axialkraft, die die Klammer axial im Bereich ihrer Umbiegung gegen die Wandungen des Hohlraums andrückt. Auf ihrer Unterseite wird die Klammer ebenfalls infolge der Federwirkung des Schenkels flächig gegen ihre Unterlage ange-drückt. Bei aneinandergesetzten Lagerschalenhälf-ten liegen die Schenkel unter Federvorspannung an jeweils entsprechenden Kanten der Lagerschalenhälften an, wodurch sie in ihren Trennflächen spielfrei aneinandergedrückt werden. Damit ist auch sichergestellt, daß die Klammern nach beendeter Lagermontage keine unerwünschten Eigenbewegungen ausführen können. Die Demontage ist einfach, weil lediglich durch axiales Auseinanderziehen die Schenkel der Klammern niedergedrückt werden müssen. Dabei ist von selbst sichergestellt, daß die Klammern jeweils einseitig in einer Aufnahme in festem Sitz gehalten werden.

Ein Ausführungsbeispiel der Erfindung ist in den Zeichnungen dargestellt und wird im folgenden näher beschrieben; es zeigen:

Fig. 1 eine Anordnung zweier durch Klammern zusammengehaltener Lagerhälften eines Gleitlagers,

Fig. 2 einen Längsschnitt durch eine Klammer entlang der in Fig. 3 eingezeichneten Schnittlinie II-II und ihre Lage in den zusammengesetzten Lagerschalenhälften,

Fig. 3 eine Draufsicht auf die Lagerschalenhälften im Bereich der Klammerverbindung,

Fig. 4 eine Ansicht auf die Trennfläche einer Lagerschalenhälfte im Bereich der Klammer in Richtung der in Fig. 2 eingezeichneten Schnittlinie IV-IV.

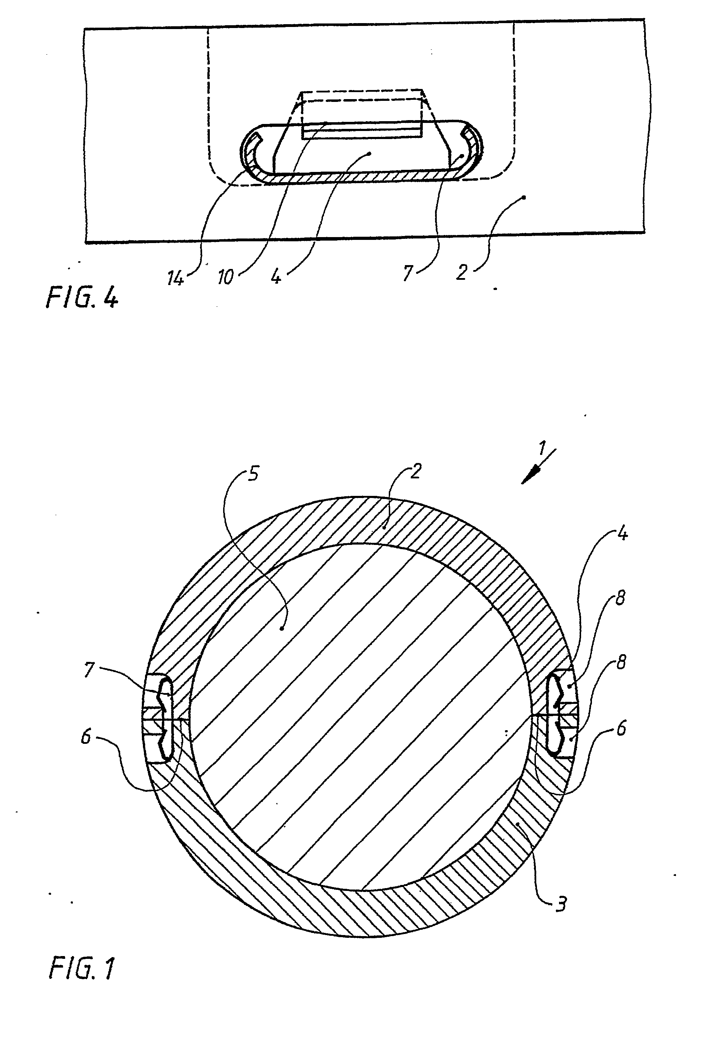

Das in Figur 1 dargestellte Gleitlager 1 besteht aus zwei Lagerschalenhälften 2 und 3, die während der Montage an zwei Umfangsstellen durch Klammern 4 zusammengehalten werden. Nach der Montage der Lager sind die Klammern 4 ohne Funktion, verbleiben jedoch an Ort und Stelle. Derartige Gleitlager 1 werden beispielsweise bei Pleuellagern an Brennkraftmaschinen eingesetzt, wobei die Lagerschalenhälften 2, 3 auf dem Lagerzapfen 5 der Kurbelwelle angeordnet sind.

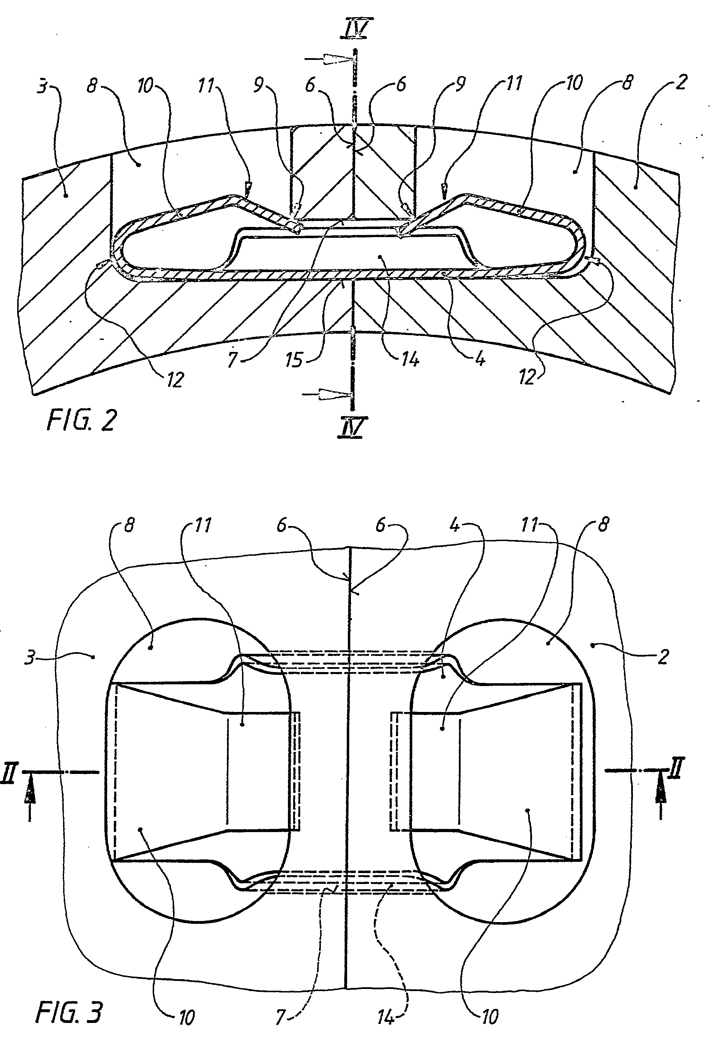

Die Figuren 2 bis 4 zeigen eine Klammer 4 in ihrem über die Trennflächen 6 zweier Lagerschalenhälften 2, 3 hinweggreifenden Sitz in von den Trennflächen 6 ausgehenden Hohlräumen 7, die als nutenförmige Ausfräsungen ausgebildet sind. Eine Querschnittsansicht eines als Aufnahme dienenden Hohlraums 7 ist in Figur 4 dargestellt, die eine Ansicht auf eine Trennfläche 6 in Richtung der in Figur 2 dargestellten Schnittlinie ist. Quer zu den von den Trennflächen 6 ausgehenden Hohlräumen 7 verlaufen Löcher 8, die ebenfalls als nutenförmige Ausfräsungen ausgebildet sind. Ihre Ausbildung ist in Figur 3, die eine Draufsicht auf die Lagerschalenhälften 2, 3 im Bereich der Klammer 4 darstellt, und in Figur 2, die einen Längsschnitt entlang der in Fi-gur 3 eingezeichneten Schnittlinie II-II darstellt, aufgezeigt. Infolge der Durchdringung der Löcher 8 und der Hohlräume 7 ergeben sich gerade Kanten 9 an stehenbleibenden Stegen, die als Anlage für die Schenkel 10 der Klammer 4 dienen.

Die Klammer 4 ist aus einem bandförmigen Materialstück mit zwei zu einer Seite hin umgebogenen Schenkeln 10 hergestellt, die im wesentlichen bügelförmig mit schrägen, dachförmig gegeneinander geneigten Flächen ausgeführt sind. Insbesondere sind die Schenkel 10 in ihren Endbereichen 11 einwärts geneigt, und liegen in diesen Bereichen linienförmig an den geraden Kanten 9 des Durchdringungsbereiches an. Die Schenkel 10 können beispielsweise auch konvex gekrümmt sein. Jedoch darf die Krümmung nicht zu flach sein, so daß ein ausreichender Formschluß mit den Kanten 9 gegeben ist. Da die Schenkel 10 unter Federvorspannung stehen, werden die Lagerschalenhälften 2, 3, infolge von axial wirkenden Kräften an ihren Trennflächen 6 spielfrei aneinandergedrückt.

Für die Montage der Klammern 4 wird aufgrund ihrer Ausbildung kein besonderes Werkzeug benötigt. Nach dem Einsetzen von Klammern 4 in die Hohlräume 7 beispielsweise in der oberen Lagerschalenhälfte 2 wird die untere Lagerschalenhälfte 3 an die auf dem Lagerzapfen 5 liegende Lagersca-lenhälfte 2 angesetzt. Da sich die Klammern 4 schon vor dem Zusammendrücken der Lagerschalenhälften 2, 3 in einem festen und wackelfreien Sitz befinden, finden sich die Klammern 4 mit ihrem anderen Ende sicher und verkantungsfrei in die offenen Hohlräume 7 der jeweils anderen Lagerschalenhälfte ein. Der feste Sitz der Klammer 4 wird dadurch erreicht, daß die Klammer 4 solange die Lagersca-lenhälften 2, 3 noch nicht zusammengefügt sind, an wenigstens drei Stellen linien- bzw. flächenförmig in ihrer Aufnahme anliegen. Infolge ihrer federnden Anlage an der Kante 9 mit ihrem einwärts geneigten Endbereich 11 entsteht eine Axialkraft, die die Klammer 4 im Bereich ihrer Umbiegung 12 an den Boden der Hohlraumwandungen andrückt. Zugleich liegt sie auch flächig mit ihrer Unterseite 15 auf ihrer Unterlage an. Auf der linken Hälfte der Figuren 2 und 3 ist die Klammer 4 dabei in der Lage gezeichnet, in der sie sich vor dem Ansetzen der Lagerschalenhälfte 2 befindet, nämlich an der Umbiegung 12 an der Hohlraumwandung axial anliegend. Die seitliche Führung der Klammer 4 erfolgt durch aufgebogene Laschen 14. Infolge dieser Abstützungen ist die Klammer 4 in einer definierten Lage fixiert. Durch Ansetzen der unteren Lagerschalenhälfte gelangt die Klammer 4 an ihrem anderen Ende mit dem schräg verlaufenden Endbereich 11 ebenfalls zur Anlage an den entsprechenden Kanten 9. Infolge der Einwärtsneigung beider Endbereiche 11 entstehen Axialkräfte, die die beiden Lagerschalenhälften 2, 3 zusammenziehen. Da sich die Lagerschalenhälften bereits jetzt in der Stellung befinden, in der sie sich nach abgeschlossener Lagermontage auch befinden, und die Klammern 4 bereits jetzt einen festen Sitz einnehmen, ist gewährleistet, daß sich die Klammern 4 auch nach beendetem Einbau des Lagers nicht frei bewegen können. Infolge der an beiden Schenkeln entgegen gerichtet wirkenden Axialkräfte wird die Klammer nach dem Ansetzen der anderen Lagerschalenhälfte in eine symmetrische Mittelstellung gezogen, in der sie nicht mehr an den axialen Wandbegrenzungen anliegt. Eine entsprechende Lage ist in der rechten Hälfte der Figuren 2 und 3 dargestellt.

Da die Schenkel 10 der Klammer 4 in zwei Richtungen überdrückbar sind, kann die Demontage des Lagers in einfacher Weise erfolgen, nämlich durch einfaches Auseinanderziehen der Lagerschalenhälften 2, 3. Hierzu wird eine handelsübliche Seegerringzange zu Hilfe genommen, die in die von den Lagerschalenhälften ausgehenden Löcher 8 eingreift und die Lagerschalenhälften auseinanderzieht. Insbesondere ist es von Vorteil, daß die federnden Enden der Klammern 4 nicht niedergedrückt werden müssen. Außerdem ist sichergestellt, daß die Klammern 4 jeweils mit einer Lagerschalenhälfte verbunden bleiben. Denn infolge von herstellbedingten Ungleichmäßigkeiten, sind auch die Federvorspannung in den Schenkeln etwas unterschiedlich, so daß niemals gleichzeitig beide Klammerenden aus ihrer Aufnahme gezogen werden. Durch unterschiedliche Federvorspannung der beiden Schenkel kann auch festgelegt werden, in welcher Lagerschalenhälfte die Klammern 4 verbleiben sollen.

In manchen Anwendungen, wenn nämlich die Lagerschalenhälften, wie dies beispielsweise an Kurbelwellenlagern von Brennkraftmaschinen der Fall ist, beim Montieren lediglich in axialer Richtung fixiert werden sollen, kann ebenfalls die dargestellte Klammer Anwendung finden. Auf einer Seite greift sie wie beschrieben an einer Lagerschalenhälfte an, während an der anderen Lagerschalenhälfte eine offene Nut zum Eingriff der Klammer genügt. Durch ihren festen Sitz ist das verkantungsfreie Ansetzen gewährleistet. Selbstverständlich kann das in die offene Nut eingreifende Ende einfacher ausgebildet sein, da ja daran nur eine axiale Abstützung erfolgt.

**Patentansprüche**

1. Geteiltes Gleitlager, mit zwei bei der Montage durch Klammern (4) aus einem federnden Flachmaterial zusammengehaltenen Lagerschalenhälften (2, 3), von deren aneinander anstoßenden Trennflächen (6) aneinander anschließende erste Langlöcher (7) ausgehen, die sich normal zu den Trennflächen (6) erstrecken, und in denen die über die Trennflächen hinweggreifenden, in den ersten Langlöchern (7) federnd abgestützten Klammern (4) angeordnet sind, die an in zwei Richtungen überdrückbaren Klammerbereichen in formschlüssige Anlage mit Kanten (9) gelangen, die infolge der Durchdringung von quer zur Erstreckungsrichtung der die Klammern aufnehmenden ersten Langlöchern (7) verlaufenden zweiten Langlöchern (8) entstehen, dadurch gekennzeichnet, daß die von den Trennflächen (6) ausgehenden Hohlräume (7), ebenso wie die quer dazu verlaufenden Löcher (8) als nutenförmige Ausfräsungen ausgebildet sind, und die Klammern (4) aus einem Materialstück mit jeweils zwei zu einer Seite hin aufeinander zu umgebogenen, bügelförmig geformten Schenkeln (10) mit in den Endbereichen (11) einwärts geneigten Abschnitten ausgebildet sind, und daß die Klammern (4) auf ihrer Unterseite (15) in den Hohlräumen (7) unterstützt sind, und bei aneinandergesetzten Lagerschalenhälften (2, 3) in beiden Endbereichen (11) an den geraden, ihnen jeweils gegenüberliegenden Kanten (9) des Durchdringungsbereichs federnd abgestützt anliegen, und daß die Klammern (4) bei einseitigem Sitz in einer Lagerschalenhälfte im Bereich der Umbiegung (12) der Schenkel (10) axial gegen die Hohlraumwandung angedrückt anliegen.

2. Einrichtung nach Anspruch 1, dadurch gekennzeichnet, daß die bügelförmigen Schenkel (10) der Klammer (4) mit schrägen, dachartig gegeneinander geneigten Flächen ausgeführt sind.

**Claims**

1. A split plain bearing having two bearing shell halves (2, 3) which are held together by clips (4) of resilient strip material and from whose mutually abutting separating surfaces (6) extend mutually adjoining first slots (7) which extend perpendicular to the separating surfaces (6) and in which are arranged the clips (4) extending across the separating surfaces and braced resiliently in the first slots (7) on the upper side and lower side, which clips at clip zones which can be depressed upon displacement in either direction come into force-locking abutment with edges (9) which are formed as a result of the penetration of second slots (8) extending transversely to the direction of extent of the first slots (7) accommodating the clips, characterised in that the clips (4) are supported substantially in the first slots (7) on their entire underside (15) remote from the second slots (8) and at their ends have limbs (10) which are bent over towards the second slots (8) and on to one another and which in the end zones (11) terminate in inwardly inclined portions, wherein the transition points into the end zones (11) form the clip zones which can be depressed upon displacement in either direction and only the inwardly inclined portions come into abutment with the edges (9), and in that the first slots (7) are exactly deep enough so that, even when one bearing shell half (2, 3) has been removed, the clip (4) remaining in a first slot (7) is always applied with its inwardly inclined portion (11) against the edge (9).

2. A device according to Claim 1, characterised in that the stirrup-shaped limbs (10) of the clip (4) are formed with oblique surfaces inclined towards one another in roof-like manner.

**Revendications**

1. Palier lisse en deux parties comportant deux demi-coussinets (2, 3) qui sont maintenus assemblés au montage par des agrafes (4) en une matière élastique plane, et des surfaces (6) de jonction s'appuyant l'une contre l'autre et desquelles partent des premiers trous oblongs (7) adjacents, qui sont normaux à ces surfaces (6) de jonction et dans lesquels sont disposées les agrafes (4), lesquelles sont soutenues élastiquement par-dessus et par-dessous, et chevauchent lesdites surfaces (6) de jonction et dont des parties pouvant être repoussées dans les deux sens sont appliquées positivement contre des arêtes (9) provenant de l'intersection par pénétration de seconds trous oblongs (8) orientés perpendiculairement au sens de l'extension de ces premiers trous (7) qui logent les agrafes, palier caractérisé en ce que ces agrafes (4) sont appliquées dans les premiers trous oblongs (7) essentiellement par leur face inférieure (15) commune, opposée aux seconds trous oblongs (8) et elles comportent à leurs extrémités des branches (10) repliées vers ces seconds trous (8) et l'une vers l'autre, qui sont prolongées à leur extrémité (11) par des segments inclinés vers l'intérieur, les zones de transition avec ces segments d'extrémité (11) formant les parties des agrafes pouvant être repoussées dans les deux sens, et seuls les segments inclinés vers l'intérieur venant s'appliquer contre les aretes (9); et en ce que les premiers trous oblongs (7) sont juste assez profonds pour que, même si un demi-coussinet (2, 3) est retiré, l'agrafe (4) qui reste dans un premier trou oblong (7) reste toujours appliquée contre l'arête (9) par son segment (11) incliné vers l'intérieur.

2. Dispositif selon la revendication 1, caractérisé en ce que les branches (10), en forme d'étriers, des agrafes (4) comportent des surfaces obliques inclinées en forme de toit l'une par rapport à l'autre.

FIG. 4

14    10    4         7    2

FIG. 1

5    2    1

7    4

8

8

6    6

3

FIG. 2

FIG. 3